# EUROPEAN PATENT APPLICATION

(11) **EP 3 892 355 A1**
(43) Date of publication of application: **13.10.2021**
(21) Application number: 18942568.9
(22) Date of filing: 05.12.2018
(51) Int. Cl.: B01D 53/04

(54) **VOCS REMOVAL SYSTEM USING SLOTTED WAVEGUIDES**

(71) Applicant: Ecopro Co. Ltd., Cheongju-si, Chungcheongbuk-do 28116 (KR)
(72) Inventor: YOON, Seong Jin, Seoul 07434 (KR); MIN, Joon Seok, Cheongju-Si Chungcheongbuk-do 28116 (KR); KIM, Jeong Yeon, Cheongju-Si Chungcheongbuk-do 28116 (KR); PARK, Sang Jun, Cheongju-Si Chungcheongbuk-do 28123 (KR); HAN, Young Kyu, Cheongju-Si Chungcheongbuk-do 28392 (KR); CHOI, Jae Young, Cheongju-Si Chungcheongbuk-do 28116 (KR); CHO, Nam Ung, Cheongju-Si Chungcheongbuk-do 28115 (KR); MOON, Sang Gil, Cheongju-Si Chungcheongbuk-do 28116 (KR)
(74) Representative: Schön, Christoph
(86) International application number: PCT/KR2018/015296
(87) International publication number: WO 2020/116670

(57) **Abstract**

The present invention system provides a system for removing VOCs using slotted waveguides, including a fixed cylindrical reactor filled with an adsorbent; slotted waveguides disposed at interfaces between regions of the cylindrical reactor, which are radially divided based on a central axis thereof, and configured to transmit microwaves to an inside of the cylindrical reactor; and a plurality of microwave modules which come into contact with outer sides of the slotted waveguides and are disposed at a predetermined interval along a periphery of the cylindrical reactor. According to the VOCs removal system of the present invention, it is possible to maximize a recycling efficiency by uniformly irradiating the recycling region with microwaves, simplify a facility, and reduce the operation costs by including the rotary type gas distribution plates, which are relatively lighter than the adsorption reactor and the microwave modules. In addition, the adsorption and desorption time may be easily controlled, and the adsorption and desorption processes may be performed simultaneously in various regions, thereby saving energy and reducing an installation space of the facility. Further, a large volume of VOCs gas may be effectively processed.

## Description

### [Technical Field]

The present invention relates to a system for removing VOCs using slotted waveguides, and more specifically, to a system for removing VOCs using slotted waveguides, which includes the slotted waveguides inside of an adsorption reactor when desorbing VOCs adsorbed in a recycling region to uniformly irradiate the adsorption reactor with microwaves, thereby maximizing an efficiency of microwaves and recycling the adsorption reactor.

### [Background Art]

Volatile organic compounds (VOCs) are easily evaporated in the atmosphere due to a very high vapor pressure, and is a representative substance that causes a photochemical reaction by receiving sunlight when coexisting with nitrogen oxides, and produces ozone and photochemical oxidizing substances to cause photochemical smog. Due to these problems, strict regulations relating thereto are being implemented both at home and abroad, and treatment thereof remains a national top priority to be addressed urgently.

Meanwhile, since painting plants of a shipyard have been excluded from being subject to emission regulations of volatile organic compounds (VOCs), legal regulations on VOCs removal facilities have been satisfied by a method of enlarging a scale of the plant. However, as environmental regulations are reinforced, there is a need for installation of effective VOCs removal facilities. In a case of a regenerative thermal oxidizer (RTO), which is an existing regenerative combustion facility, operation costs are increased by burning air which is not highly concentrated, and an installation space thereof is insufficient due to equipment requiring an enlarged size.

In view of these problems, a technique using microwaves has also been developed to reduce the operation costs and installation space in removing the VOCs.

Patent Document 1 (Korean Patent Registration No. 10-1323108), which relates to a VOCs removal system, discloses a method for recycling a honeycomb type VOCs adsorption rotor by directly irradiating the adsorption rotor with horizontally polarized microwaves. In this case, due to a difficulty in blocking the leaked microwaves, an efficiency of the microwaves may be reduced and the work stability may be decreased because a recycling region is not irradiated with the microwaves. In addition, since there is a limit to a capacity that can be processed in one adsorption rotor, it is difficult to utilize the above system in a large-scale workplace such as a painting plant of the shipyard. Further, the operation costs are increased due to a continuous operation of the adsorption rotor, and a recycled air is partially dispersed before reaching a recycling region.

Therefore, it is necessary to develop a VOCs removal system that can reduce a burden on a separate microwave blocking facility and maximize energy efficiency while increasing recycling efficiency by uniformly irradiating the recycling region with microwaves.

### [Summary of Invention]

### [Problems to be Solved by Invention]

Accordingly, it is an object of the present invention to provide a VOCs removal system, which may maximize an efficiency of microwaves, simplify a facility and reduce operation costs thereof, as well as effectively process a large volume of VOCs gas.

However, the problem to be solved by the present invention is not limited to the above-mentioned problems, and those skilled in the art will clearly understand other problems which are not mentioned above from the following description.

### [Means for Solving Problems]

In order to achieve the above-described object, according to an aspect of the present invention, there is provided a system for removing VOCs using gas distribution plates including: a fixed cylindrical reactor filled with an adsorbent; slotted waveguides disposed at interfaces between regions of the cylindrical reactor, which are radially divided based on a central axis thereof, and configured to transmit microwaves to an inside of the cylindrical reactor; and a plurality of microwave modules which come into contact with outer sides of the slotted waveguides and are disposed at a predetermined interval along a periphery of the cylindrical reactor.

### [Advantageous Effects]

According to the VOCs removal system of the present invention, it is possible to maximize a recycling efficiency by uniformly irradiating the recycling region with microwaves, simplify a facility, and reduce the operation costs by including the rotary type gas distribution plates, which are relatively lighter than the adsorption reactor and the microwave modules. In addition, the adsorption and desorption time may be easily controlled, and the adsorption and desorption processes may be performed simultaneously in various regions, thereby saving energy and reducing an installation space of the facility. Further, a large volume of VOCs gas may be effectively processed.

### [Brief Description of Drawings]

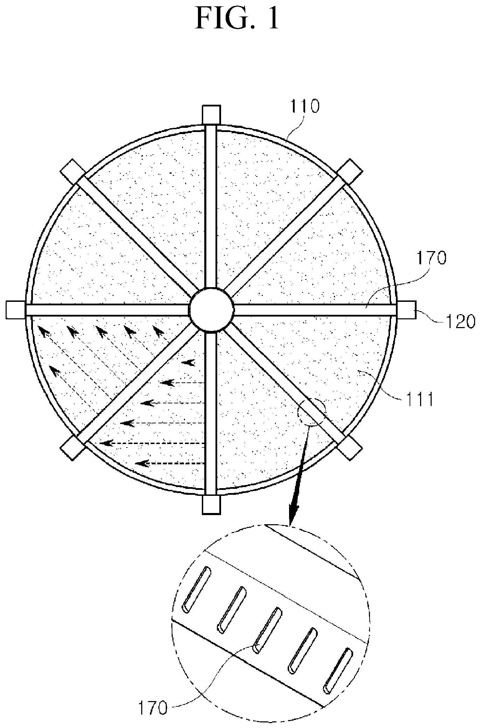

FIG. 1 is a cross-sectional view and a partially enlarged view illustrating some components of a configuration of a system for removing VOCs (also referred to as a "VOCs removal system") according to an embodiment of the present invention, with a configuration in which slotted waveguides are disposed inside of a cylindrical adsorption reactor having radially divided regions and microwave modules disposed at outer sides of the waveguides.
FIG. 2A is a view illustrating a concept of an upper gas distribution plate which is installed when the VOCs removal system according to the embodiment of the present invention has one recycling region.
FIG. 2B is a view illustrating a concept of a lower gas distribution plate which is installed when the VOCs removal system according to the embodiment of the present invention has one recycling region.
FIG. 3A is a view illustrating a concept of an upper gas distribution plate which is installed when the VOCs removal system according to the embodiment of the present invention has two recycling regions.
FIG. 3B is a view illustrating a concept of a lower gas distribution plate which is installed when the VOCs removal system according to the embodiment of the present invention has two recycling regions.
FIG. 4 is a view illustrating a configuration in which the upper and lower gas distribution plates are provided in the cylindrical adsorption reactor when the VOCs removal system according to the embodiment of the present invention has one recycling region.
FIG. 5 is a view illustrating a configuration in which the upper and lower gas distribution plates are provided in the cylindrical adsorption reactor when the VOCs removal system according to the embodiment of the present invention has two recycling regions.
FIG. 6 is a cross-sectional view of the VOCs removal system according to the embodiment of the present invention.
FIG. 7 is a view illustrating a configuration in which the VOCs removal system according to the embodiment of the present invention and peripheral facilities are integrated.

### [Mode for Carrying out Invention]

Hereinafter, exemplary embodiments of the present invention will be described in detail. The following embodiments are described in order to enable those of ordinary skill in the art to embody and practice the present invention. However, the present invention is not limited to the embodiments disclosed below, but can be implemented in various forms. To aid in understanding the present invention, like numbers refer to like elements throughout the description of the figures, and the description of the same elements will not be described.

In the specification, when the explanatory phrase a part "includes" a component is used, this means that the part may further include the component without excluding other components, so long as special explanation is not given.

In the present disclosure, it shall not be construed that terms such as "including" or "comprising," various constituent elements or steps described in the specification need to be all essentially included, and it shall be construed that some constituent elements or steps among the various constituent elements or steps may be omitted, or additional constituent elements or steps may be further included.

Hereinafter, a system for removing VOCs using slotted waveguides of the present invention will be described in detail with reference to the accompanying drawings.

The present invention discloses a system for removing VOCs using slotted waveguides, which includes: a fixed cylindrical reactor 110 filled with an adsorbent; slotted waveguides 170 disposed at interfaces between regions of the cylindrical reactor 110, which are radially divided based on a central axis thereof, and configured to transmit microwaves to the inside of the cylindrical reactor 110; and a plurality of microwave modules 120 which come into contact with outer sides of the slotted waveguides 170 and are disposed at a predetermined interval along a periphery of the cylindrical reactor 110.

According to the present invention, it is intended that, by manufacturing the waveguides for transmitting the microwaves in a slot shape, and placing them at a predetermined interval inside the cylindrical reactor 110, the desired regions of the cylindrical reactor 110 are uniformly irradiated with the microwaves.

The slotted waveguide 170 has a plurality of slots formed therein, thereby allowing the microwaves to be uniformly emitted through the plurality of slots.

The cylindrical adsorption reactor 110 is filled with an adsorbent 111 including activated carbon, zeolite, and the like so as to adsorb VOCs components in a VOCs-containing gas. In addition, an inside of the cylindrical adsorption reactor 110, which is filled with the adsorbent 111, is radially divided into a plurality of regions based on a central axis. The adsorption reactor having the divided region therein includes adsorption regions configured to adsorb VOCs in the VOCs-containing gas supplied from an outside, and at least one recycling region configured to desorb the VOCs adsorbed in the adsorption regions through a recycled air with a high temperature. In addition, the adsorption reactor may further include a cooling region in which cooling is performed after the VOCs are desorbed.

The microwave modules 120 are disposed at a predetermined interval along the outer periphery of the cylindrical adsorption reactor 110. Preferably, the microwave modules 120 are disposed so as to be in contact with outer sides, that is, outer peripheral surfaces of the slotted waveguides 170 which are respectively disposed at the interfaces between the radially divided regions of the cylindrical reactor 110. In other words, since the microwave modules 120 may be disposed to correspond to the slotted waveguides 170, a plurality of microwave modules 120 may also be provided similar to the plurality of slotted waveguides 170.

The plurality of microwave modules 120 may be manufactured to surround the peripheral surface of the cylindrical adsorption reactor 110, or may be manufactured to be included as a portion of a case 140 which surrounds the peripheral surface of the cylindrical adsorption reactor 110. Thereby, the microwave modules 120 or the case 140 including the same may prevent the microwave from being leaked to the outside from the peripheral surface of the cylindrical adsorption reactor 110. When recycling the region in which the microwave module 120 is disposed, the microwave module is turned on to irradiate the recycling region with microwaves, thus to heat the VOCs-containing gas therein. When the recycling is completed, the microwave module is turned off and an operation of the system is stopped. The peripheral surface of the cylindrical adsorption reactor 110 may be made of a mica plate 112 to allow the microwaves to pass through.

The present invention is intended to simplify a facility and reduce operation costs by including the rotary type gas distribution plates, which are relatively lighter than the adsorption reactor and the microwave modules.

For this, the VOCs removal system of the present invention includes a rotary upper gas distribution plate having a supply pipe configured to supply a recycled air to the recycling region and disposed on an upper portion of the cylindrical adsorption reactor; and a rotary lower gas distribution plate having a discharge pipe configured to discharge the recycled air containing VOCs desorbed from the recycling region and disposed on a lower portion of the cylindrical adsorption reactor. In addition, when the upper gas distribution plate and the lower gas distribution plate rotate, and then the supply pipe and the discharge pipe are located in an upper section and a lower section of the recycling region, the recycled air is supplied to the recycling region, and at the same time, a microwave module disposed on a peripheral surface of the recycling region is switched to an operation state to heat the recycling region.

The rotary gas distribution plate is configured to be disposed on the upper and lower portions of the cylindrical adsorption reactor 110, respectively. The upper gas distribution plates 130a and 130a' disposed on the upper portion of the cylindrical adsorption reactor 110 include supply pipes 133a and 133a' for supplying the recycled air to the recycling region of the cylindrical adsorption reactor 110. The recycled air is supplied to the supply pipes 133a and 133a' through recycled air inlets 132a and 132a' connected thereto. Meanwhile, the lower gas distribution plates 130b and 130b' disposed on the lower portion of the cylindrical adsorption reactor 110 include discharge pipes 133b and 133b' for discharging the recycled air containing VOCs desorbed from the recycling region of the cylindrical adsorption reactor 110. The discharge pipes 133b and 133b' may be connected with recycled air outlets 132b and 132b'. The supply pipes 133a and 133a' of the upper gas distribution plates 130a and 130a' and the discharge pipes 133b and 133b' of the lower gas distribution plates 130b and 130b' are located at a portion in which the recycling region of the cylindrical adsorption reactor 110 is projected directly above or below the recycling region of the cylindrical adsorption reactor 110, respectively. For the convenience of explanation, regions in which the recycling regions of the cylindrical adsorption reactor 110 are projected on the upper gas distribution plates 130a and 130a' will be referred to as upper recycling regions 131a and 131a', and regions in which the recycling regions are projected on the lower gas distribution plates 130b and 130b' will be referred to as lower recycling regions 131b and 131b'.

The upper gas distribution plates 130a and 130a' and the lower gas distribution plates 130b and 130b' are configured to rotate periodically in the same direction, with the same rotation period as each other on the upper and lower portions of the cylindrical adsorption reactor 110.

When the upper gas distribution plates 130a and 130a' and the lower gas distribution plates 130b and 130b' rotate, and then the upper recycling regions 131a and 131a' and the lower recycling regions 131b and 131b' are located on the same vertical line as the recycling region of the cylindrical adsorption reactor 110, that is, during the supply pipes 133a and 133a' and the discharge pipes 133b and 133b' being located at upper and lower sections of the recycling region, the recycled air is supplied to the upper section of the recycling region of the cylindrical adsorption reactor 110 through the supply pipes 133a and 133a'. At the same time, the microwave module 120 disposed on the sides of the recycling region is switched from an operation stop state to an operation state, thereby heating the recycling region. As a result, the adsorbed VOCs components are desorbed. The recycled air containing the desorbed VOCs is discharged through discharge pipes 133b and 133b' disposed on the lower section of the recycling region.

The rotation period and recycling time may be adjusted by pre-setting them through a timer or program. That is, the rotation period of the upper and lower gas distribution plates 130a, 130a', 130b, and 130b', a rotation stop time during recycling, and an operation time of the microwave module 120 may be preset through the timer or program. Therefore, it is possible to easily control the adsorption and desorption time of VOCs.

Alternatively, it may be configured in such a way that, by including sensors, positions of the upper recycling regions 131a and 131a' and the lower recycling regions 131b and 131b' located on the same vertical line as the recycling region of the cylindrical adsorption reactor 110 are detected, so as to stop the rotation of the upper and lower gas distribution plates 130a, 130a', 130b and 130b', and perform an injection of the recycled air and an operation of the microwave module 120 based on the detected positions.

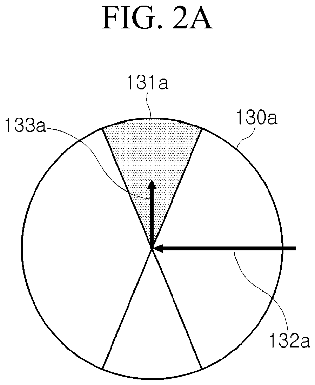

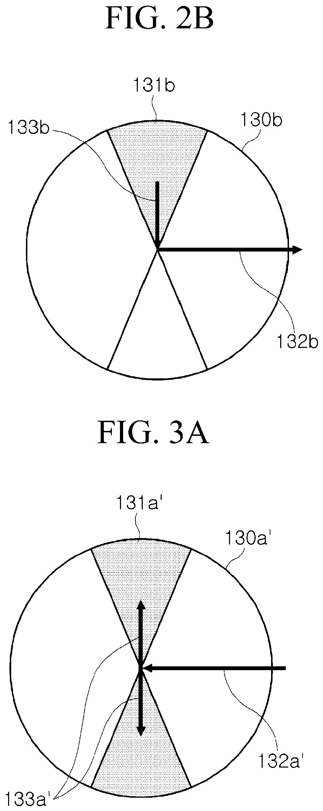

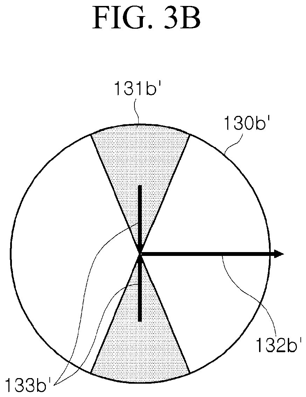

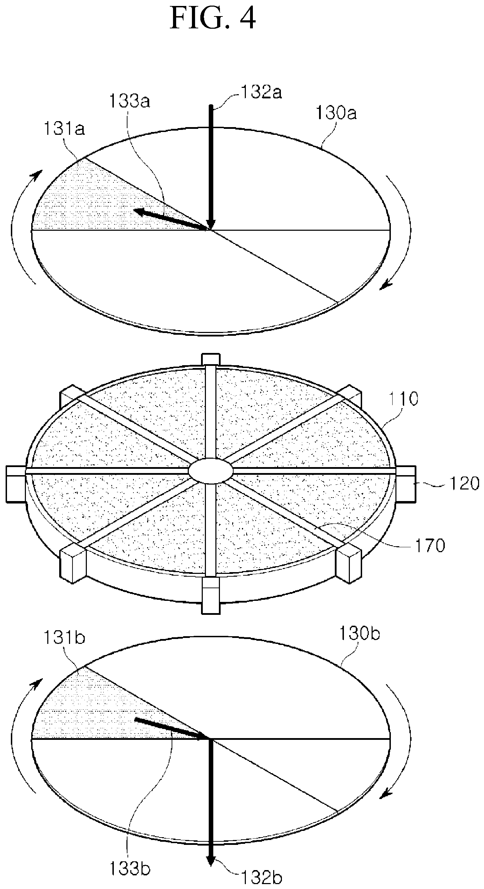

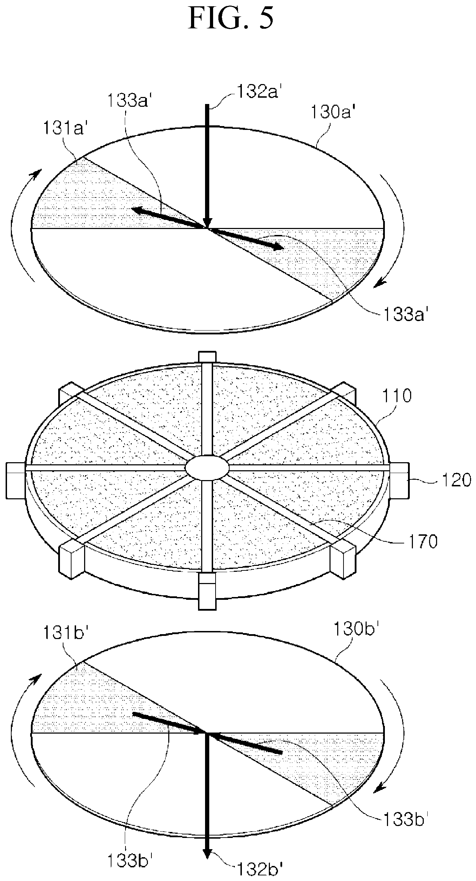

The region to be recycled at the same time may be one divided recycling region or a plurality of recycling regions radially arranged at a predetermined interval. FIGS. 2 and 4, and FIGS. 3 and 5 are views illustrating a concept in which the upper and lower gas distribution plates are coupled with the cylindrical adsorption reactor in cases of having one recycling region and two recycling regions, respectively.

As such, in order to achieve a single or a plurality of recycling regions in the cylindrical adsorption reactor 110, the numbers of the supply pipes 133a and 133a' of the upper gas distribution plates 130a and the discharge pipes 133b and 133b' of the lower gas distribution plates 130b and 130b' are set so that one or a plurality of pipes are radially disposed at a predetermined interval. In this case, the plurality of supply pipes 133a and 133a' and the discharge pipes 133b and 133b' are disposed radially at a predetermined interval about rotation axes of the upper and lower gas distribution plates 130a, 130a', 130b and 130b'.

Similar to the recycling region, the adsorption region may be formed in several regions at the same time. As such, the adsorption and desorption processes may be performed in the several regions at the same time, thereby saving energy and installation space of the facility.

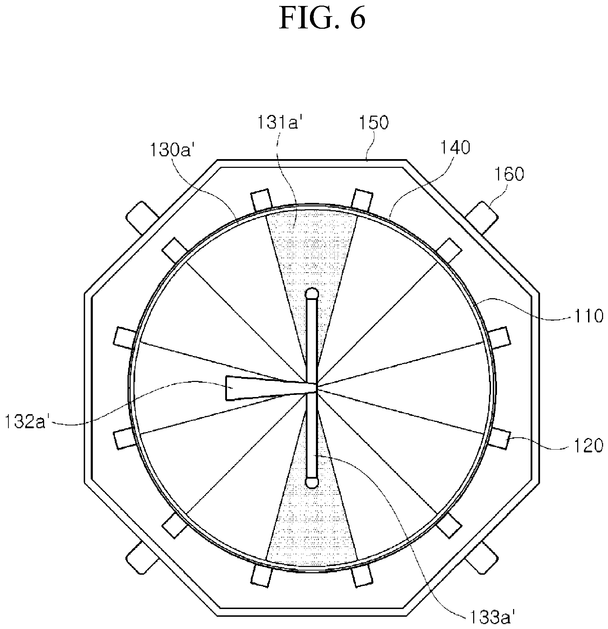

As shown in FIG. 6, the VOCs removal system of the present invention may further include an additional case 150 which surrounds the upper gas distribution plates 130a and 130a' and the lower gas distribution plates 130b and 130b', and the microwave modules 120, and compressed air inlets 160 formed in the additional case 150. Herein, a degree of adhesion between the upper and lower gas distribution plates 130a, 130a', 130b and 130b' and the cylindrical adsorption reactor 110 may be adjusted by injecting or discharging a compressed air through the compressed air inlets 160.

That is, it may be configured in such a way that: the upper gas distribution plates 130a and 130a' and the lower gas distribution plates 130b and 130b' are in close contact with the cylindrical adsorption reactor 110 during supplying the recycled air to the recycling region and maintaining the operation state of the microwave module 120; and the upper gas distribution plates 130a and 130a' and the lower gas distribution plates 130b and 130b' are spaced apart from the cylindrical adsorption reactor 110 when stopping a supply of the recycled air to the recycling region and switching the microwave module 120 to the operation stop state. By injecting and discharging the compressed air into and from the recycling region as described above, the degree of adhesion between the upper and lower gas distribution plates 130a, 130a', 130b and 130b' and the cylindrical adsorption reactor 110 may be adjusted. Through such a configuration, the supplied recycled air may be prevented from being distributed to the adsorption region or the cooling region adjacent to the recycling region so as to allow the supplied recycled air to be fully used for a recycling operation.

In order to further enhance the effect of recycling, the cross-sectional areas of the upper gas distribution plates 130a and 130a' and the lower gas distribution plates 130b and 130b' are preferably configured to coincide with the cross-sectional area of the cylindrical adsorption reactor 110.

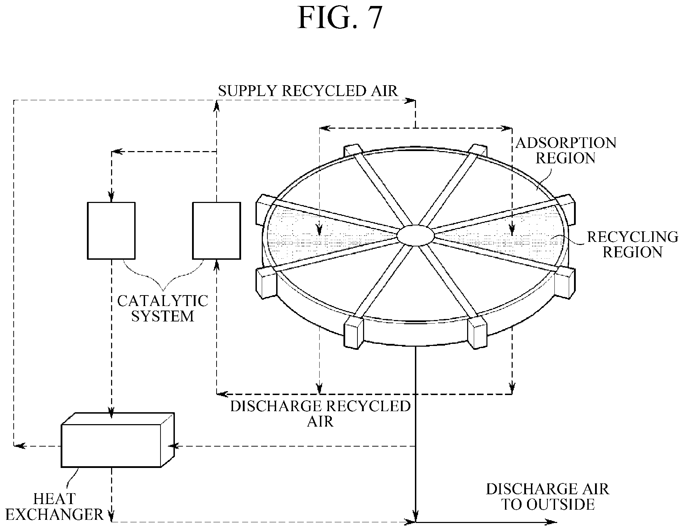

FIG. 7 is a view illustrating a configuration in which the cylindrical adsorption reactor 110 of the present invention, a catalyst system, and a heat exchanger are integrated.

The VOCs-containing gas is supplied to the adsorption region from the outside, and VOCs of the VOCs-containing gas are adsorbed thereto. In this case, a fresh air from which the VOCs are removed by adsorption is discharged to the outside.

As the VOCs-containing recycled air discharged from the recycling region passes through a catalytic reactor, the VOCs are desorbed from the recycling region and oxidatively decomposed into carbon dioxide and water. That is, in the catalytic reactor, the VOCs are oxidized into carbon dioxide (CO₂) and water (H₂O) under a heating condition at about 200 to 350°C, in this case, a Pd catalyst, Pt catalyst, Ru catalyst or Rh catalyst may be used as an oxidation catalyst.

The catalytic reactor of the present invention may be further provided with a separate microwave module to be utilized as a heat source. The desorbed VOCs-containing hot gas is introduced into a body of the catalytic reactor, and absorbs microwaves to be used as a heat source, thereby the VOCs are removed and treated by facilitating the decomposition thereof.

The hot air containing CO₂/H₂O passing through the catalytic reactor is subjected to heat exchange in a heat exchanger, a waste heat generated from the catalytic reactor is supplied to the recycled air, which may be recycled as energy for a desorption reaction in the recycling region.

When the adsorption reactor of the present invention includes the cooling region, after the VOCs are desorbed in the cooling region, cooling of the adsorption reactor in which the surface temperature is increased by microwaves is performed. At this time, by supplying a cooling air to the cooling region, the adsorption reactor may be cooled to room temperature. The injected cooling air is converted into a hot air having a temperature of about 50 to 100°C, and similar to the hot air containing CO₂/H₂O passing through the catalytic reactor, the hot air passing through the cooling region is also subjected to heat exchange in the heat exchanger, and the waste heat is supplied to the recycled air, which may be recycled as energy for the desorption reaction in the recycling region.

On the other hand, the air cooled while passing through the heat exchanger and CO₂/H₂O are discharged to the outside.

As described above, according to the present invention, by placing the slotted waveguide inside the adsorption reactor, the microwave is uniformly emitted to increase the recycling efficiency. In addition, by fixing the adsorption reactor and the microwave module, which occupy a large part in terms of volume and weight in the VOCs removal system, and by including the gas distribution plates having a relatively lightweight in a rotary type structure, it is possible to simplify the facility and reduce the operation costs. In addition, since the adsorption and desorption time can be easily controlled and the adsorption and desorption processes can be carried out simultaneously in several regions, a single adsorption reactor may achieve effects similar to the effects obtained by several adsorption reactors. Further, since the microwave modules are fixed to the adsorption reactor in terms of the structure thereof, it is possible to prevent the microwave from being leaked to the outside from the peripheral surface of the adsorption reactor. Furthermore, the upper and lower gas distribution plates 130a, 130a', 130b and 130b' are configured to be in close contact with the adsorption reactor while irradiating with the microwaves, such that it is possible to maximize the efficiency of the microwaves by blocking the microwave leakage in the upper and lower region of the adsorption reactor. In addition, it is possible to increase the recycling efficiency, by preventing the recycling gas from being dispersed in the adsorption region or the cooling region adjacent to the recycling region.

## Claims

1. A system for removing VOCs using slotted waveguides, comprising:
a fixed cylindrical reactor filled with an adsorbent;
slotted waveguides disposed at interfaces between regions of the cylindrical reactor, which are radially divided based on a central axis thereof, and configured to transmit microwaves to an inside of the cylindrical reactor; and
a plurality of microwave modules which come into contact with outer sides of the slotted waveguides and are disposed at a predetermined interval along a periphery of the cylindrical reactor.

2. The system for removing VOCs using slotted waveguides according to claim 1, wherein the slotted waveguide has a plurality of slots through which the microwaves are uniformly emitted.

3. The system for removing VOCs using slotted waveguides according to claim 1. further comprising:
an adsorption region configured to adsorb VOCs and a recycling region configured to desorb the VOCs adsorbed in the adsorption region, which are included in the radially divided regions;
a rotary upper gas distribution plate having a supply pipe configured to supply a recycled air to the recycling region and disposed on an upper portion of the cylindrical adsorption reactor; and
a rotary lower gas distribution plate having a discharge pipe configured to discharge the recycled air containing VOCs desorbed from the recycling region and disposed on a lower portion of the cylindrical adsorption reactor,
wherein, when the upper gas distribution plate and the lower gas distribution plate rotate, and then the supply pipe and the discharge pipe are located in an upper section and a lower section of the recycling region, the recycled air is supplied to the recycling region, and at the same time, a microwave module disposed on a peripheral surface of the recycling region is switched to an operation state to heat the recycling region.

4. The system for removing VOCs using slotted waveguides according to claim 3, wherein the cylindrical adsorption reactor has a cross-sectional area coinciding with cross-sectional areas of the upper gas distribution plate and the lower gas distribution plate.

5. The system for removing VOCs using slotted waveguides according to claim 3, wherein the upper gas distribution plate and the lower gas distribution plate periodically rotate in the same direction and have the same rotation period as each other.

6. The system for removing VOCs using slotted waveguides according to claim 3, wherein the upper gas distribution plate and the lower gas distribution plate are in close contact with the cylindrical adsorption reactor during supplying the recycled air to the recycling region and maintaining the operation state of the microwave module; and
the upper gas distribution plate and the lower gas distribution plate are spaced from the cylindrical adsorption reactor when stopping a supply of the recycled air to the recycling region and switching the microwave module to an operation stop state.

7. The system for removing VOCs using slotted waveguides according to claim 3, further comprising:
an additional case which surrounds the upper gas distribution plate and the lower gas distribution plate, and the microwave module; and
compressed air inlets formed in the additional case,
wherein a degree of adhesion between the upper and lower gas distribution plates and the cylindrical adsorption reactor is adjusted by injecting or discharging a compressed air through the compressed air inlets.

8. The system for removing VOCs using slotted waveguides according to claim 3, wherein a plurality of supply pipes and discharge pipes are radially disposed at a predetermined interval about rotation axes of the upper and lower gas distribution plates, thus to achieve a plurality of recycling regions in the cylindrical adsorption reactor.

9. The system for removing VOCs using slotted waveguides according to claim 3, further comprising a catalytic reactor configured to oxidize the VOCs desorbed in the recycling region.

10. The system for removing VOCs using slotted waveguides according to claim 9, further comprising a heat exchanger configured to perform heat exchange on a hot air passing through the catalytic reactor, such that a waste heat generated from the catalytic reactor is supplied to the recycled air.
